# EUROPÄISCHE PATENTANMELDUNG

(11) **EP 3 689 665 A1**
(43) Veröffentlichungstag der Anmeldung: **05.08.2020**
(21) Anmeldenummer: 19215155.3
(22) Anmeldetag: 11.12.2019
(51) Int. Cl.: B60L 50/40, B60L 50/60, B60L 58/20, B60L 58/13, B60L 7/10, B60W 30/18

(54) **VERFAHREN ZUM BETREIBEN EINES HAUPTENERGIESPEICHERS**

(30) Priorität: 31.01.2019 DE 102019201243
(71) Anmelder: Audi AG, 85045 Ingolstadt (DE)
(72) Erfinder: Wittl, Tobias, 85077 Manching (DE)

(57) **Zusammenfassung**

Die Erfindung betrifft ein Verfahren zum Betreiben mindestens eines elektrischen Hauptenergiespeichers für ein Fahrzeug (30), wobei in dem mindestens einen Hauptenergiespeicher elektrische Energie gespeichert wird, die zum Antreiben des Fahrzeugs (30) genutzt wird, wobei ein Ladezustand des mindestens einen Hauptenergiespeichers abhängig von einem jeweiligen Wert einer vorgesehenen Richt-Geschwindigkeit für das Fahrzeug (30) und abhängig von einem aktuellen Wert einer Ist-Geschwindigkeit des Fahrzeugs (30) eingestellt wird.

## Beschreibung

Die Erfindung betrifft ein Verfahren zum Betreiben mindestens eines elektrischen Hauptenergiespeichers für ein Fahrzeug und ein System zum Betreiben mindestens eines elektrischen Hauptenergiespeichers für ein Fahrzeug.

Ein Kraftfahrzeug, das mit einer Elektromaschine angetrieben wird, weist als elektrische Energiequelle für die Elektromaschine eine Batterie auf. Dabei kann es erforderlich sein, einen Ladezustand der Batterie an eine Bewegung des Kraftfahrzeugs anzupassen.

Die Druckschrift DE 2 453 149 A1 beschreibt eine elektronische Geschwindigkeitsregel- bzw. Steuerschaltung für ein Fahrzeug.

Ein System zur Speicherung von elektrischer Energie ist in der Druckschrift DE 101 16 463 A1 beschrieben.

Eine Leistungsquellen-Steuerungsvorrichtung zum Steuern eines Fahrzeugs ist aus der Druckschrift DE 11 2014 001 587 T5 bekannt.

Vor diesem Hintergrund war es eine Aufgabe, einen elektrischen Energiespeicher für ein Fahrzeug geeignet zu steuern.

Diese Aufgabe wird durch ein Verfahren und ein System mit den Merkmalen der unabhängigen Patentansprüche gelöst. Ausführungsformen des Verfahrens und des Systems gehen aus den abhängigen Patentansprüchen hervor.

Das erfindungsgemäße Verfahren ist zum Betreiben mindestens eines elektrischen Hauptenergiespeichers, bspw. eines Kondensators, eines Fahrzeugs bzw. für ein Fahrzeug, insbesondere in einem Fahrzeug, vorgesehen, wobei in dem mindestens einen Hauptenergiespeicher elektrische Energie gespeichert wird, die zum Antreiben bzw. Fortbewegen des Fahrzeugs durch eine Elektromaschine genutzt wird. Dabei wird ein Ladezustand des mindestens einen Hauptenergiespeichers zu einem Zeitpunkt bzw. eine Menge an elektrischer Energie, die in dem mindestens einen Hauptenergiespeicher zu dem Zeitpunkt gespeichert wird bzw. ist, abhängig von einem jeweiligen Wert, bspw. einem zeitabhängigen Wert, einer vorgesehenen und/oder erlaubten Richt-Geschwindigkeit für das Fahrzeug, bspw. auf einem von dem Fahrzeug befahrenen Untergrund, und abhängig von einem aktuellen Wert einer Ist-Geschwindigkeit des Fahrzeugs, bspw. auf dem von dem Fahrzeug befahrenen Untergrund, eingestellt.

Dabei ist es möglich, dass der Wert für die Richt-Geschwindigkeit für den Untergrund und somit bspw. für eine Straße vorgesehen ist bzw. wird, den das Fahrzeug zu einem jeweiligen Zeitpunkt, d. h. zu einem aktuellen oder zukünftigen Zeitpunkt, befährt und/oder befahren wird.

Das vorgestellte Verfahren ist für jeden elektrischen Energiespeicher des Fahrzeugs durchführbar, der hier definitionsgemäß als elektrischer Hauptenergiespeicher ausgebildet ist und/oder bezeichnet wird. Der mindestens eine derartige Hauptenergiespeicher unterscheidet sich von mindestens einem weiteren elektrischen Energiespeicher des Fahrzeugs, der hier definitionsgemäß als elektrischer Nebenenergiespeicher ausgebildet ist und/oder bezeichnet wird. Der mindestens eine elektrische Hauptenergiespeicher und der mindestens eine elektrische Nebenenergiespeicher können in einer möglichen Ausführungsform des Verfahrens untereinander und/oder gegenseitig elektrische Energie austauschen.

Der mindestens eine elektrische Hauptenergiespeicher als elektrischer Energiespeicher ist in Ausgestaltung als Kondensator ausgebildet. Somit ist es möglich, das Verfahren für mindestens einen als Kondensator ausgebildeten Hauptenergiespeicher auszuführen bzw. durchzuführen. Es ist auch möglich, dass der mindestens eine elektrische Hauptenergiespeicher als Hochleistungsenergiespeicher, insbesondere Hochleistungssekundärenergiespeicher ausgebildet ist, wobei dieser Hochleistungsenergiespeicher Lithium-lonen-basiert sein kann. Ein derartiger Hauptenergiespeicher kann bspw. in einem Kinetic-Energy-Recovery-System bzw. KERS-System eingesetzt werden, wie es auch im Rennsport, bspw. in der Formel 1, in einem Fahrzeug eingesetzt wird. Ein derartiges KERS-System weist die Elektromaschine auf und ist dazu ausgebildet, kinetische Energie des Fahrzeugs in elektrische Energie umzuwandeln, wobei die Elektromaschine bei einer Bremsung des Fahrzeugs als Generator und/oder rekuperativ betrieben wird, wobei die von der Elektromaschine gewandelte elektrische Energie in den Hauptenergiespeicher übertragen wird.

Außerdem ist es denkbar, dass der mindestens eine elektrische Nebenenergiespeicher bspw. als Batterie bzw. Akkumulator ausgebildet ist und sich von dem mindestens einen bspw. als Kondensator ausgebildeten elektrischen Hauptenergiespeicher unterscheidet. Es ist jedoch auch möglich, dass der mindestens eine elektrische Hauptenergiespeicher als sogenannter erster Kondensator und der mindestens eine elektrische Nebenenergiespeicher als weiterer, sogenannter zweiter Kondensator ausgebildet ist. Es ist alternativ oder ergänzend möglich, dass der mindestens eine elektrische Hauptenergiespeicher als sogenannte erste Batterie und der mindestens eine elektrische Nebenenergiespeicher als weitere, sogenannte zweite Batterie ausgebildet ist. Das Verfahren kann auf alle Hochleistungsenergiespeicher übertragen werden.

Bei dem Verfahren wird der Ladezustand des mindestens einen Hauptenergiespeichers, bspw. Kondensators, bzw. die Menge an elektrischer Energie, die in dem mindestens einen Hauptenergiespeicher zu dem Zeitpunkt, bspw. zu dem jeweiligen Zeitpunkt, gespeichert ist bzw. wird, abhängig von einem Wert einer als Soll-Geschwindigkeit und/oder als zulässige Höchst-Geschwindigkeit ausgebildeten Richt-Geschwindigkeit, eingestellt, mit dem das Fahrzeug den Untergrund befährt.

Dabei ist es auch möglich, dass das Fahrzeug zunächst und/oder aktuell auf einem ersten Abschnitt des Untergrunds fährt und nachfolgend bzw. zukünftig auf einem zweiten Abschnitt des Untergrunds fahren wird, wobei sich der Wert der Richt-Geschwindigkeit bei einem Übergang von dem ersten Abschnitt zu dem zweiten Abschnitt des Untergrunds ändert. Unter Berücksichtigung einer Änderung des Werts der Richt-Geschwindigkeit von dem ersten Abschnitt zu dem zweiten Abschnitt wird der Ladezustand entsprechend eingestellt. Dabei kann auch ein Unterschied zwischen dem Wert der Richt-Geschwindigkeit für den ersten Abschnitt, der aktuell befahren wird, und dem zweiten Abschnitt, der zukünftig befahren wird, berücksichtigt werden.

In Ausgestaltung wird ein Unterscheid bzw. eine Differenz zwischen dem Wert der vorgesehenen und/oder vorgeschriebenen Richt-Geschwindigkeit und dem aktuellen Wert der Ist-Geschwindigkeit berücksichtigt, wobei es möglich ist, den Ladezustand abhängig von diesem Unterschied einzustellen, wobei zudem berücksichtigt werden kann, ob der Wert der Ist-Geschwindigkeit größer, gleich oder kleiner als der Wert der Richt-Geschwindigkeit ist.

Das erfindungsgemäße System ist zum Betreiben mindestens eines elektrischen Hauptenergiespeichers, bspw. Kondensators, für ein Fahrzeug ausgebildet, wobei der mindestens eine Hauptenergiespeicher dazu ausgebildet ist, elektrische Energie, die zum Antreiben bzw. Fortbewegen des Fahrzeugs von einer Elektromaschine verwendet wird, zu speichern. Das System weist ein Steuergerät auf, das dazu ausgebildet ist, einen Ladezustand bzw. eine Menge an elektrischer Energie, die in dem mindestens einen Hauptenergiespeicher zu einem jeweiligen Zeitpunkt zu speichern bzw. speicherbar ist, abhängig von einem Wert einer vorgesehenen und/oder erlaubten Richt-Geschwindigkeit für das Fahrzeug, bspw. auf einem von dem Fahrzeug befahrenen Untergrund, und abhängig von einem aktuellen Wert einer Ist-Geschwindigkeit des Fahrzeugs, bspw. auf dem von dem Fahrzeug befahrenen Untergrund, einzustellen und/oder zu veranlassen, dass der Ladezustand abhängig von dem jeweiligen Wert der Richt-Geschwindigkeit und der Ist-Geschwindigkeit eingestellt wird.

Ferner weist das System ein Navigationsgerät des Fahrzeugs auf, wobei das Navigationsgerät dazu ausgebildet ist, mindestens einen vorgesehenen Wert, bspw. einen aktuellen Wert und/oder einen zukünftigen Wert, der Richt-Geschwindigkeit zu erfassen und/oder zu ermitteln und eine Information darüber dem Steuergerät bereitzustellen. Es ist auch denkbar, dass mit dem Navigationsgerät auch der aktuelle Wert der Ist-Geschwindigkeit des Fahrzeugs erfasst und/oder ermittelt wird. Weiterhin kann der aktuelle Wert der Ist-Geschwindigkeit von einem Tachometer des Fahrzeugs erfasst und/oder ermittelt werden. Der erfasste und/oder ermittelte Wert der Ist-Geschwindigkeit wird ebenfalls dem Steuergerät bereitgestellt.

Mit dem Verfahren ist es möglich, den mindestens einen Hauptenergiespeicher als elektrischen Energiespeicher bzw. als elektrische Energiequelle des Fahrzeugs intelligent zu steuern.

Dabei wird ein Ladezustand des mindestens einen Hauptenergiespeichers, bspw. Kondensators, an die gefahrene Ist-Geschwindigkeit bzw. den aktuellen Wert der Ist-Geschwindigkeit und die erlaubte Richt-Geschwindigkeit bzw. den Wert der Richt-Geschwindigkeit angepasst. In einer Kombination mit dem Navigationssystem kann der mindestens eine Hauptenergiespeicher auch vorausschauend be- und entladen werden. Das Navigationssystem als mögliche Komponente des Systems ist dazu ausgebildet, einen jeweiligen Wert der Richt-Geschwindigkeit, wie er jeweils auf einem Abschnitt des Untergrunds vorgesehen ist und auch eine Änderung dieses Werts zu erkennen und/oder zu erfassen.

Dabei kann der mindestens eine Hauptenergiespeicher u. a. im Stadtverkehr deutlich intensiver genutzt werden, da keine zusätzliche Energie für eine Beschleunigung, auf z. B. einen Wert der Richt-Geschwindigkeit, wie er auf einer Autobahn erlaubt ist, bereitgehalten werden muss. Dabei wird berücksichtigt, dass eine Software zum Kontrollieren des Verfahrens erlaubt, dass der mindestens eine Hauptenergiespeicher bei einem erlaubten Wert der Richt-Geschwindigkeit von bspw. 50 km/h bei einem Wert der Ist-Geschwindigkeit von 70 km/h komplett entladen sein darf. Diese mögliche Ausführungsform des Verfahrens kann sich ergeben, falls ein Fahrer des Fahrzeugs versehentlich bzw. unbeabsichtigt auf eine Ist-Geschwindigkeit beschleunigt hat, die höher als die Richt-Geschwindigkeit ist.

Ohne diese Funktion müsste in dem mindestens einen Kondensator als Hauptenergiespeicher bei einer Fahrt des Fahrzeugs so viel Energie vorgehalten werden, um das Fahrzeug auf der Autobahn auch auf einen hohen Wert der Richt-Geschwindigkeit von z. B. 180 km/h beschleunigen zu können. Mit dem Verfahren wird berücksichtigt, dass der erlaubte Wert für die Richt-Geschwindigkeit auf der Autobahn höher als der erlaubte Wert für die Richt-Geschwindigkeit in einer Ortschaft, bspw. einer Stadt, ist.

Zusätzlich können von dem Navigationsgerät bereitgestellte Navigationsdaten genutzt werden, um beispielsweise den mindestens einen bspw. als Kondensator ausgebildeten Hauptenergiespeicher bereits vor dem Einfahren auf eine Autobahn oder Schnellstraße möglichst vollständig zu laden bzw. auf die zu erwartenden Verkehrsverhältnisse einzustellen. So ist für den mindestens einen Hauptenergiespeicher bspw. im Stadtverkehr eine geringere Leistung als bei einer Fahrt auf der Autobahn erforderlich.

Durch die hohe Fähigkeit zur Rekuperation ist das Verfahren für alle elektrisch angetriebenen Fahrzeuge, z. B. Kraftfahrzeuge (Kfz) bzw. Personenkraftwagen (Pkw), Lastkraftwagen (Lkw), Züge oder Krafträder, durchführbar.

Das elektrisch angetriebene Fahrzeug, für das das Verfahren durchgeführt werden kann, weist neben dem mindestens einen Hauptenergiespeicher, bspw. Kondensator, als Hochleistungsspeicher noch den mindestens einen Nebenenergiespeicher, bspw. die Batterie bzw. Batteriezelle, mit einer hohen Energiedichte auf, wodurch für das Fahrzeug eine hohe Reichweite erreicht werden kann. Mit dem mindestens einen als Kondensator ausgebildeten Hauptenergiespeicher, insbesondere Hochleistungsspeicher, kann eine hohe Leistungsfähigkeit für das Fahrzeug garantiert werden. Ein derartiger Kondensator ist extrem leistungsfähig, d. h. im Vergleich zu einer Batterie leistungsfähiger, wobei eine Batterie eine höhere Energiedichte als ein Kondensator ausweist.

Kondensatoren können im Fahrzeug eingesetzt werden, um Leistungsspitzen auszugleichen und dadurch die Batterien zu schonen und ihre Lebensdauer zu verlängern. Leistungsspitzen treten meist bei starken Beschleunigungen und bei der Rekuperation auf. Da Kondensatoren in der Anschaffung relativ teuer sind, sollten sie möglichst effizient eingesetzt werden. Mit dem Verfahren ist es möglich, dass Kondensatoren bei einem Stillstand des Fahrzeugs vollständig geladen sind und abhängig von der aktuellen Ist-Geschwindigkeit des Fahrzeugs genug Leistung haben, um es weiter beschleunigen zu können. Zusätzlich sollte der mindestens eine Kondensator soweit entladen sein, dass mindestens ein Teil der mechanischen Energie bzw. Bewegungsenergie des Fahrzeugs, bspw. die gesamte Bewegungsenergie bzw. ein Großteil der Bewegungsenergie bei einem Bremsvorgang über den Kondensator rekuperiert werden kann, wobei die mechanische Energie bei der Rekuperation von der Elektromaschine wieder in elektrische Energie umgewandelt wird.

In Ausgestaltung kann eine vorgegebene bzw. erlaubte Richt-Geschwindigkeit berücksichtigt werden, für die auf unterschiedlichen Straßen bzw. auf unterschiedlichen Abschnitten des von dem Fahrzeug befahrenen bzw. zu befahrenden Untergrunds unterschiedlich hohe Werte von bspw. 30 km/h oder 50 km/h in einer Ortschaft, 100 km/h auf einer Bundesstraße, bspw. 120 km/h auf einer Schnellstraße und bspw. 180 km/h auf einer Autobahn oder bspw. 70 km/h innerhalb einer Baustelle auf der Autobahn vorgesehen und/oder erlaubt sind.

Je höher die erlaubte Richt-Geschwindigkeit ist, desto mehr Energie ist in dem Hauptenergiespeicher, bspw. Kondensator, zu speichern, um die jeweilige Richt-Geschwindigkeit ausgehend von einer geringeren Ist-Geschwindigkeit, mit der das Fahrzeug aktuell fährt, bei einer Beschleunigung kurzzeitig erreichen zu können. Falls das Fahrzeug jedoch gebremst werden soll, müsste der Hauptenergiespeicher weitgehend geleert sein und eine ausreichend große Speicherkapazität bzw. Ladekapazität aufweisen, so dass er genügend elektrische Energie aufnehmen und speichern kann, wobei das Fahrzeug ausgehend von einer aktuell gefahrenen Ist-Geschwindigkeit, die höher als die Richt-Geschwindigkeit ist, auf die Richt-Geschwindigkeit zu bremsen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt ein Ragone-Diagramm für unterschiedliche elektrische Energiespeicher.
Figur 2 zeigt in schematischer Darstellung eine Ausführungsform des erfindungsgemäßen Systems bei Durchführung einer Ausführungsform des erfindungsgemäßen Verfahrens.

Die Figuren werden zusammenhängend und übergreifend beschrieben, gleichen Bezugszeichen sind dieselben Komponenten zugeordnet.

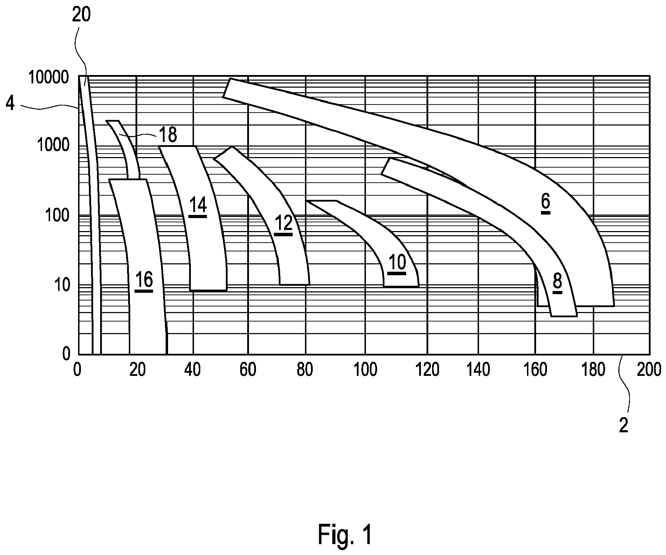

Das Ragone-Diagramm aus Figur 1 ist zum Vergleich unterschiedlicher elektrischer Energiespeicher vorgesehen und weist eine Abszisse 2 und eine Ordinate 4 auf. Dabei ist entlang der Abszisse 2 eine spezifische Energie eines jeweiligen Energiespeichers, bspw. auf Zellebene einer Batteriezelle bzw. Batterie, bzw. eine Energiedichte des jeweiligen Energiespeichers in Wh/kg aufgetragen. Entlang der Ordinate 4 ist eine spezifische Leistung des jeweiligen Energiespeichers, bspw. auf Zellebene der Batteriezelle bzw. Batterie, bzw. eine Leistungsdichte des jeweiligen Energiespeichers in W/kg aufgetragen.

In dem Diagramm sind mehrere Isochronen 6, 8, 10, 12, 14, 16, 18, 20 für verschiedene elektrische Energiespeicher dargestellt. Dabei ist eine erste Isochrone 6 für einen Energiespeicher, der als Lithium-Ionen-Batterie ausgebildet ist, vorgesehen, wobei ein erster Bereich der ersten Isochrone 6 mit einer spezifischen Energiedichte von ca. 50 Wh/kg bis ca. 100 Wh/kg für eine High-Power- bzw. Hochleistungs-Lithium-Ionen-Batterie vorgesehen ist, und wobei ein zweiter Bereich der ersten Isochrone 6 mit einer spezifischen Energiedichte von ca. 160 Wh/kg bis ca. 190 Wh/kg für eine High-Energy- bzw. Hochenergie-Lithium-Ionen-Batterie vorgesehen ist. Eine zweite Isochrone 8 ist für einen als Lithium-Polymer-Batterie ausgebildeten Energiespeicher vorgesehen. Eine dritte Isochrone 10 ist für einen als Natriumnickelchlorid- bzw. NaNiCl₂-Batterie bzw. Zebra-Batterie ausgebildeten Energiespeicher vorgesehen. Eine vierte Isochrone 12 ist für einen als Nickelmetallhydrid- bzw. NiMH-Batterie ausgebildeten Energiespeicher vorgesehen. Eine fünfte Isochrone 14 ist für einen als Nickelcadmium- bzw. NiCd-Batterie ausgebildeten Energiespeicher vorgesehen. Eine sechste Isochrone 16 ist für einen als Blei- bzw. Pb-Batterie ausgebildeten Energiespeicher vorgesehen. Eine siebte Isochrone 18 ist für einen als spiralgewickelten- bzw. spiral-wound-Blei-Batterie ausgebildeten Energiespeicher vorgesehen. Eine achte Isochrone 20 ist hier für einen als Kondensator, hier bspw. als Superkondensator, ausgebildeten Energiespeicher vorgesehen.

Eine jeweilige Isochrone 6, 8, 10, 12, 14, 16, 18, 20 für einen jeweiligen Energiespeicher gibt eine Zeit an, die sich durch Division der spezifischen Energie bzw. Energiedichte durch die spezifische Leistung bzw. Leistungsdichte ergibt. Dabei zeigen die in dem Ragone-Diagramm weitgehend diagonal verlaufenden Isochronen 6, 8, 10, 12, 14, 16, 18, 20, dass ein jeweiliger Energiespeicher, d. h. eine jeweilige Batterie bzw. der Kondensator, entweder eine hohe Energiedichte und eine niedrige Leistungsfähigkeit oder eine hohe Leistungsfähigkeit und eine niedrige Energiedichte aufweist.

Das Ragone-Diagramm soll hier als Anhaltspunkt zum Vergleich unterschiedlicher elektrischer Energiespeicher dienen. Es ist jedoch möglich, dass eine Energiedichte einer Batterie variiert und bspw. auch höher, insbesondere deutlich höher als hier dargestellt sein kann. Die Darstellung dient zur Orientierung und zur Darstellung eines Leistungs- und/oder Energiespektrums von verschiedenen Typen von elektrischen Energiespeichern.

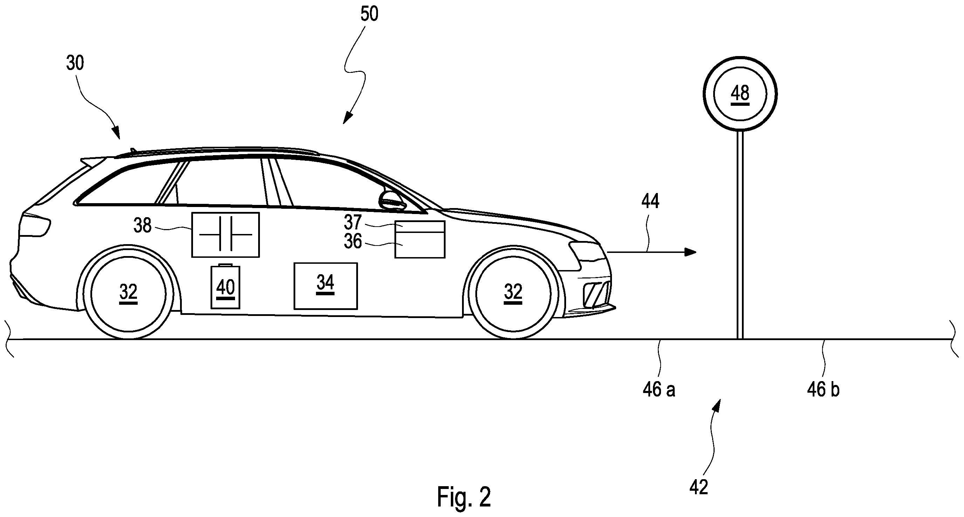

Figur 2 zeigt in schematischer Darstellung ein hier als Kraftfahrzeug bzw. als Auto ausgebildetes und/oder zu bezeichnendes Fahrzeug 30, das hier Räder 32, eine Elektromaschine 34, ein Steuergerät 36, ein Navigationsgerät 37 für ein Navigationssystem und zwei elektrische Energiespeicher, nämlich einen Kondensator 38 als Hauptenergiespeicher und eine Batterie 40 als Nebenenergiespeicher, aufweist. Das Fahrzeug 30 wird hier elektrisch angetrieben, wobei elektrische Energie, die in mindestens einem der Energiespeicher gespeichert ist, zum Antreiben bzw. Fortbewegen des Fahrzeugs 30, zu der Elektromaschine 34 übertragen und von dieser, wenn sie als Motor betrieben wird, in mechanische Energie umgewandelt wird, wodurch die Räder 32 in Rotation versetzt werden und das Fahrzeug 30, hier auf einem als Straße ausgebildeten Untergrund 42, bewegt wird, der hier in zwei Abschnitte 46a, 46b unterteilt ist.

Dabei weist das Fahrzeug 30 hier eine Ist-Geschwindigkeit mit einem aktuellen Wert auf, die hier durch einen Pfeil 44 bzw. einen Vektor symbolisiert ist. An einer Grenze bzw. an einem Übergang der beiden Abschnitte 46a, 46b des Untergrunds 42 ist ein Verkehrsschild 48 angeordnet. Dabei ist in dem ersten Abschnitt 46a ein erster Wert für eine Richt-Geschwindigkeit bzw. eine erlaubte und/oder zulässige maximale Geschwindigkeit und in dem zweiten Abschnitt 46b ein zweiter Wert für die Richt-Geschwindigkeit bzw. die erlaubte und/oder zulässige maximale Geschwindigkeit vorgesehen, wobei die Richt-Geschwindigkeit an der Grenze zwischen dem ersten und dem zweiten Abschnitt 46a, 46b geändert wird.

Falls die Elektromaschine 34 als Motor betrieben wird, ist es möglich, das Fahrzeug 30 durch Erhöhen der Leistung zu beschleunigen, insbesondere positiv zu beschleunigen. Weiterhin ist es möglich, eine Rekuperation durchzuführen, wobei die Elektromaschine 34 als Generator betrieben wird und mechanische Energie in elektrische Energie umgewandelt wird, die in mindestens einem der Energiespeicher gespeichert wird, wobei das Fahrzeug 30 durch Verringern der Leistung gebremst bzw. negativ beschleunigt wird.

Die Ausführungsform des erfindungsgemäßen Systems 50 weist als Komponenten zumindest den Kondensator 38 als Hauptenergiespeicher und das Steuergerät 36 auf. Je nach Definition kann bzw. können auch die Batterie 40 als Nebenenergiespeicher, das Navigationsgerät 37 und/oder die Elektromaschine 34 als Komponenten dieser Ausführungsform des Systems 50 ausgebildet sein.

Bei der Ausführungsform des erfindungsgemäßen Verfahrens wird ein Ladezustand des Kondensators 38, d. h. eine Menge an elektrischer Energie, die in dem Kondensator 38 jeweils aktuell gespeichert ist bzw. wird, abhängig von dem jeweiligen Wert der für den Untergrund 42 vorgesehenen Richt-Geschwindigkeit und dem aktuellen Wert der Ist-Geschwindigkeit des Fahrzeugs 30 eingestellt.

Dabei ist hier vorgesehen, dass der Wert der Ist-Geschwindigkeit mit dem Wert der Richt-Geschwindigkeit verglichen wird.

Falls der Wert der Ist-Geschwindigkeit kleiner als der Wert der Richt-Geschwindigkeit ist, weist der Ladezustand einen hohen Wert auf. Somit ergibt sich die Möglichkeit, kurzzeitig eine hohe bzw. große Menge an elektrischer Energie aus dem Kondensator 38 zu der Elektromaschine 34 zu übertragen und das Fahrzeug 30 zu beschleunigen. Dabei ist es in Ausgestaltung denkbar, dass der Ladezustand umso höher ist, je größer ein Unterschied zwischen dem Wert der Richt-Geschwindigkeit und dem Wert der Ist-Geschwindigkeit ist. Hierbei wird im Rahmen des Verfahrens der jeweils vorgesehene Wert des Ladezustands eingestellt.

Falls der Wert der Ist-Geschwindigkeit dagegen größer als der Wert der Richt-Geschwindigkeit ist, weist der Ladezustand einen vergleichsweise niedrigen bzw. geringen Wert auf. Somit ergibt sich die Möglichkeit, bei Durchführung der Rekuperation kurzzeitig eine hohe bzw. große Menge an elektrischer Energie, die von der Elektromaschine 34 aus mechanischer Energie gewandelt wird, aus der Elektromaschine 34 zu dem Kondensator 38 zu übertragen und darin zu speichern, wobei das Fahrzeug 30 gebremst wird. Dabei ist es in Ausgestaltung denkbar, dass der Ladezustand umso niedriger ist, je größer ein Unterschied zwischen dem Wert der Ist-Geschwindigkeit und dem Wert der Richt-Geschwindigkeit ist.

Hierbei ist auch zu berücksichtigen, dass sich ein jeweils vorgegebener Wert der Richt-Geschwindigkeit an einem hier bspw. als Geschwindigkeitsschild oder als Ortsschild ausgebildeten Verkehrsschild 48 ändert, mit dem ein jeweils vorgesehener Wert der Richt-Geschwindigkeit angezeigt wird, die für einen jeweiligen Abschnitt 46a, 46b des Untergrunds 42 vorgesehen und/oder vorgeschrieben ist.

Dabei ist vorgesehen, eine Ladekapazität bzw. eine Menge an elektrischer Energie in dem Kondensator 38 bereits zu ändern, bevor das Fahrzeug 30 eine Ortschaft verlässt oder bevor es in eine Ortschaft fährt, wobei der Wert der Richt-Geschwindigkeit innerhalb der Ortschaft mit bspw. 50 km/h kleiner als der Wert, bspw. von 100 km/h, außerhalb der Ortschaft ist.

Falls sich das Fahrzeug 30, wie hier gezeigt, auf dem ersten Abschnitt 46a des Untergrunds 42 befindet und sich in Richtung des zweiten Abschnitts 46b auf dem Untergrund 42 bewegt, wird eine Änderung des Werts der Richt-Geschwindigkeit an dem Verkehrsschild 48 durch das Navigationsgerät 37 ermittelt, wobei es möglich ist, die Ladekapazität bzw. eine Speicherkapazität des Kondensators 38 bereits vorausschauend zu ändern, wenn sich das Fahrzeug 30 zu einem aktuellen Zeitpunkt noch auf dem ersten Abschnitt 46a befindet, dem zweiten Abschnitt 46b nähert und sich erst zu einem zukünftigen Zeitpunkt auf dem zweiten Abschnitt 46b befinden wird.

Zum vorausschauenden Ändern der Ladekapazität in Abhängigkeit einer bevorstehenden Änderung der Richt-Geschwindigkeit kann elektrische Energie aus der Batterie 40 als Nebenenergiespeicher in den Kondensator 38 als Hauptenergiespeicher übertragen und darin gespeichert werden, falls der Ladezustand des Kondensators 38 erhöht bzw. vergrößert werden soll, wenn sich der Wert der Richt-Geschwindigkeit erhöht bzw. vergrößert. Alternativ kann elektrische Energie aus dem Kondensator 38 in die Batterie 40 übertragen und darin gespeichert werden, falls der Ladezustand des Kondensators 38 verringert bzw. verkleinert werden soll, wenn sich der Wert der Richt-Geschwindigkeit verringert bzw. verkleinert.

Es ist denkbar, dass der Ladezustand von einer Relation bzw. einem Unterschied zwischen der Richt-Geschwindigkeit und der Ist-Geschwindigkeit abhängig ist. Damit kann bspw. berücksichtigt werden, ob die Ist-Geschwindigkeit größer oder kleiner als die Richt-Geschwindigkeit ist. Hierbei ist zu berücksichtigen, dass die Relation von mindestens einem weiteren Faktor bzw. Parameter abhängig ist. Ein derartiger Faktor ist beispielsweise eine in dem hier als Kondensator 38 ausgebildeten Hauptenergiespeicher, bspw. Hochleistungsspeicher, maximal speicherbare Energie. Außerdem kann das System 50 je nach aktuellem Fahrmodus des Fahrzeugs 30 betrieben werden. Zum Beispiel in einem sogenannten Reichweitenmodus als Fahrmodus, bei dem das System 50 mit einer maximalen Effizienz betrieben wird, oder in einem Sportmodus als Fahrmodus, bei dem das System 50 dazu eingestellt ist, eine maximale Leistung so oft und lang wie möglich bereitzustellen.

Falls die aktuell gefahrene Ist-Geschwindigkeit und die erlaubte Richt-Geschwindigkeit gleich groß sind, kann das System 50 und somit der Kondensator 38 als Hauptenergiespeicher vorausschauend mit elektrischer Energie geladen und entladen werden.

In Ausgestaltung des Verfahrens kann auch berücksichtigt werden, dass das Fahrzeug 30 das Verkehrsschild 48 passiert und dabei entweder von dem ersten Abschnitt 46a mit einem niedrigen Wert der Richt-Geschwindigkeit zu dem zweiten Abschnitt 46b mit einem hohen Wert der Richt-Geschwindigkeit oder alternativ von dem ersten Abschnitt 46a mit einem hohen Wert der Richt-Geschwindigkeit zu dem zweiten Abschnitt 46b mit einem niedrigen Wert der Richt-Geschwindigkeit fährt, wobei eine Relation der Ist-Geschwindigkeit zu der bevorstehenden Änderung des Werts der Richt-Geschwindigkeit beachtet werden kann. Hierbei ist es möglich, dass der Kondensator 38 als Hochleistungsspeicher vorausschauend geladen bzw. entladen wird. Alternativ oder ergänzend kann der Ladezustand des Kondensators 38 als Hochleistungsspeicher an die gefahrene Ist-Geschwindigkeit und die vorgesehene Richt-Geschwindigkeit angepasst werden.

Es ist ggf. denkbar, dass der Ladezustand bzw. eine gespeicherte Menge an elektrischer Energie in dem Kondensator 38 von einem Unterschied zwischen der Richt- und Ist-Geschwindigkeit abhängig ist. Es können auch weitere Faktoren, bspw. Betriebsparameter, des Fahrzeugs berücksichtigt werden.

### BEZUGSZIFFERN:

- 2: Abszisse
- 4: Ordinate
- 6, 8, 10, 12, 14, 16, 18, 20: Isochrone
- 30: Fahrzeug
- 32: Rad
- 34: Elektromaschine
- 36: Steuergerät
- 37: Navigationsgerät
- 38: Kondensator
- 40: Batterie
- 42: Untergrund
- 44: Pfeil
- 46a, 46b: Abschnitt
- 48: Verkehrsschild
- 50: System

## Patentansprüche

1. Verfahren zum Betreiben mindestens eines elektrischen Hauptenergiespeichers für ein Fahrzeug (30), wobei in dem mindestens einen Hauptenergiespeicher elektrische Energie gespeichert wird, die zum Antreiben des Fahrzeugs (30) genutzt wird, wobei ein Ladezustand des mindestens einen Hauptenergiespeichers abhängig von einem jeweiligen Wert einer vorgesehenen Richt-Geschwindigkeit für das Fahrzeug (30) und abhängig von einem aktuellen Wert einer Ist-Geschwindigkeit des Fahrzeugs (30) eingestellt wird.

2. Verfahren nach Anspruch 1, bei dem der Ladezustand des mindestens einen Hauptenergiespeichers abhängig von einem Wert einer als Soll-Geschwindigkeit ausgebildeten Richt-Geschwindigkeit eingestellt wird.

3. Verfahren nach Anspruch 1 oder 2, das für mindestens einen als Kondensator (38) ausgebildeten Hauptenergiespeicher ausgeführt wird.

4. Verfahren nach einem der voranstehenden Ansprüche, bei dem das Fahrzeug (30) zunächst auf einem ersten Abschnitt (46a) eines Untergrunds (42) fährt und nachfolgend auf einem zweiten Abschnitt (46b) des Untergrunds (42) fahren wird, wobei sich der Wert der Richt-Geschwindigkeit bei einem Übergang von dem ersten Abschnitt (46a) zu dem zweiten Abschnitt (46b) des Untergrunds (42) ändert, wobei der Ladezustand bspw. abhängig von einer Änderung der Richt-Geschwindigkeit an dem Übergang eingestellt wird.

5. Verfahren nach einem der voranstehenden Ansprüche, bei dem ein Unterscheid zwischen dem Wert der Richt-Geschwindigkeit und dem Wert der Ist-Geschwindigkeit berücksichtigt wird.

6. System zum Betreiben mindestens eines elektrischen Hauptenergiespeichers für ein Fahrzeug (30), wobei der mindestens eine Hauptenergiespeicher dazu ausgebildet ist, elektrische Energie, die zum Antreiben des Fahrzeugs (30) genutzt wird, zu speichern, wobei das System (50) ein Steuergerät (36) aufweist, das dazu ausgebildet ist, einen Ladezustand des mindestens einen Hauptenergiespeichers abhängig von einem Wert einer vorgesehenen Richt-Geschwindigkeit für das Fahrzeug (30) und abhängig von einem aktuellen Wert einer Ist-Geschwindigkeit des Fahrzeugs (30) einzustellen.

7. System nach Anspruch 6, das ein Navigationsgerät (37) des Fahrzeugs (30) aufweist, wobei das Navigationsgerät (37) dazu ausgebildet ist, mindestens einen Wert der Richt-Geschwindigkeit zu erfassen und dem Steuergerät (36) eine Information darüber bereitzustellen.
